# EUROPÄISCHE PATENTANMELDUNG

(11) **EP 1 929 884 A1**
(43) Veröffentlichungstag der Anmeldung: **11.06.2008**
(21) Anmeldenummer: 06025003.2
(22) Anmeldetag: 04.12.2006
(51) Int. Cl.: A23L 1/30, A23L 2/02

(54) **Verfahren zur Herstellung von Sterolformulierungen**

(71) Anmelder: Cognis IP Management GmbH, 40589 Düsseldorf (DE)
(72) Erfinder: Horlacher, Peter, 89287 Bellenberg (DE); Hietsch, Dieter, 89257 Illertissen (DE); Schwarzer, Jörg, 40723 Hilden (DE); Jenzer, Bernd, 88481 Balzheim (DE)
(74) Vertreter: Reinhardt, Jürgen

(57) **Zusammenfassung**

Vorgeschlagen wird ein Nassvermahlungs- Verfahren zur Herstellung von gut benetzbaren Sterolformulierungen, bei dem man
a) ein Additiv ausgewählt aus der Gruppe, die gebildet wird von Proteinen, proteinhaltigen Hilfsstoffen, Kohlenhydraten, Cellulosederivaten, Zuckeralkoholen, Fruchtkonzentraten und Gemüsekonzentraten in Wasser oder einem wässrigen Suspensionsmedium löst oder dispergiert
b) dieser Lösung/Dispersion Sterol- und/oder Stanolpartikel mit einer mittleren Teilchengröße von mindestens 1 mm zusetzt,
c) die so entstandene Dispersion in einer Mühle, die nach dem Rotor-Stator-Prinzip arbeitet, homogenisiert und zerkleinert, und
d) gegebenenfalls anschließend trocknet,
mit der Maßgabe, dass die Sterol- und/oder Stanolpartikel in der Endformulierung in einer Teilchengrößenverteilung mit einem D_{90%} von maximal 50 µm vorliegen.

Die nach diesem Verfahren hergestellten sterolhaltigen Formulierungen lassen sich aufgrund ihrer guten Benetzbarkeit ohne größeren technischen Aufwand in Lebensmittel einarbeiten und zeigen insbesondere in Getränken und Milchprodukten gute organoleptische und sensorische Eigenschaften.

## Beschreibung

### Gebiet der Erfindung

Die Erfindung befindet sich auf dem Gebiet der Lebensmittel und betrifft ein Verfahren zur Herstellung gut benetzbarer Phytosterolhaltiger Formulierungen, die nach diesem Verfahren hergestellten Zubereitungen sowie Produkte, insbesondere Lebensmittel, die diese Formulierungen beinhalten.

### Stand der Technik

Aus der Anwendungstechnologie sind zahlreiche Formulierungsmöglichkeiten bekannt, um die als Cholesterinsenker eingesetzten, schlecht wasserlöslichen Phytosterole und -stanole in Lebensmittelzubereitungen oder pharmazeutische Produkte einarbeiten zu können. In zahlreichen Patentanmeldungen wird beschrieben, wie die Verfügbarkeit von Sterolen über die Reduktion der Partikelgrößen vornehmlich durch Mikronisation verbessert werden kann.
So beschreibt die deutsche Offenlegungsschrift DE 102 53 111 A1 pulverförmige Phytosterol-Formulierungen mit einer mittleren Teilchengröße von 0,01 bis 100 µm, die sich gut in Wasser redispergieren lassen. Bevorzugt werden hydrophile Hilfsstoffe als Schutzkolloide eingesetzt. Zur Herstellung der Pulver werden zum Nachteil der Ökologie und Verträglichkeit organische Lösungsmittel verwendet. Auch die Internationale Anmeldung WO 2005/074717 A1 verwendet eine Art Schutzkolloid durch die Einbettung von Sterolen in eine Matrix, die Proteine und Kohlenhydrate enthält. Der Gesamtgehalt an Sterolen in der Formulierung fällt jedoch durch den hohen Anteil an Hilfsstoffen gering aus.

Einen weiteren Prozess zur Herstellung einer Steroldispersion, in der die Partikelgrößenverteilung der Sterole bei 0,1 bis 30 µm liegt, entnimmt man den Internationalen Anmeldungen WO 03/105611 und WO 2005/049037**.** Wie in diesem Verfahren ist häufig die Mikronisation der Sterolpartikel alleine nicht ausreichend, um eine gute Einarbeitbarkeit zu erreichen. Zwar lässt sich durch die Erhöhung der Oberfläche die Bioverfügbarkeit der fein dispergierten Teilchen verbessern, jedoch sind gerade die mikronisierten Partikel schlecht benetzbar, aggregieren leicht und schwimmen auf wässrigen Oberflächen meistens auf. Häufig lässt sich das gemahlene Sterol nur mit speziellen Methoden in einem Getränk dispergieren, wozu intensives Mischen notwendig ist. Diese Geräte stehen jedoch im Normalfall dem Endanwender der Lebensmittelhersteller nicht zur Verfügung.

Daher kombinieren viele Hersteller die Mikronisation der Sterole mit der zusätzlichen Anwendung von Emulgatoren. Ein Beispiel dafür sind die in dem Europäischen Patent EP 0897671 B1 beanspruchten Zubereitungen mit Sterolen und Sterolestern mit einer Partikelgröße von maximal 15 µm in einem Gemisch mit ausgewählten Emulgatoren, wobei das Gewichtsverhältnis Emulgator zu Sterol in der wässrigen Phase weniger als 1:2 beträgt.
In der Internationalen Patentanmeldung WO 03/086468 A1 werden pulverförmige Sterolesterformulierungen mit einem geringen Proteingehalt und Mono- und Diglyceriden als Emulgatoren offenbart. Auch wenn diese sich durch eine gute Verträglichkeit auszeichnen und als Lebensmittelemulgatoren über einen langen Zeitraum bereits bekannt sind, versucht man die Menge der Emulgatoren zu verringern oder sie gar ganz zu vermeiden, da Emulgatoren auch die Bioverfügbarkeit weiterer in den Lebensmitteln vorhandener Substanzen beeinflussen oder die Stabilität der Formulierungen negativ verändern können.

Weitere Methoden zur Verbesserung der Löslichkeit und Dispergierbarkeit wie die Formulierung als Emulsionen, Microemulsionen, Dispersionen, Suspensionen oder die Komplexierung mit Cyclodextrinen oder Gallensalzen werden in der Internationalen Patentanmeldung WO 99/63841 A1 vorgestellt. Als Träger werden PEG, PVP, Copolymere, Celluloseether und - ester vorgeschlagen. Auch der direkte Einsatz von Lebensmittelgrundstoffen als Träger für pulverisierte Sterole in Form eines Premixes ist aus der EP 1 003 388 B1 bekannt. Die Auswahl von Proteinen als Trägersubstanzen für unveresterte Sterole und Stanole wird in der WO 01/37681 offenbart.

Insbesondere die Verarbeitung von unveresterten Sterolen und Stanolen, die noch weitaus hydrophober als ihre veresterten Derivate sind, stellt hohe Anforderungen an das Herstellverfahren. Freie, gemahlene Sterine weisen zudem den Nachteil auf, dass sie über eine geringe Mindestzündenergie (MZE < 3 mJ) verfügen, so dass diese Produkte als extrem sensitiv gegenüber Zündung eingestuft werden. Daher muss bei der Verwendung von freien Sterinen auf entsprechende Sicherheitsvorkehrungen geachtet werden. Ein mögliches Verfahren zur Herstellung von sterolhaltigen Mikropartikeln kann man dem Europäischen Patent EP 1148793 B1 entnehmen. Es basiert auf einer energiereichen Homogenisation. Ein danach auf Basis wässriger Suspensionmittel hergestelltes Pulver hat jedoch eine unzureichende Homogenität und lässt sich nur schwer redispergieren. Nachteil vieler sterolhaltiger Pulverformulierungen ist das Agglomerationsverhalten der freien Sterole bei der Lagerung. Während der Lagerung, vor allem wenn unter Druck gelagert wird, beobachtet man starke Verbackungen bzw. Klumpenbildungen, die festen, unkontrollierten Agglomerate müssen wiederum zerkleinert werden, um dann verarbeitet werden zu können.

In der Internationalen Patentanmeldung WO 2006/020980 A1 werden Agglomerate aus Sterolpartikeln beschrieben. Das Herstellungsverfahren stellt eine aufbauende Granulierung eines Klebstoffgranulates dar, bei dem die mikronisierten Sterolpartikel mit einem Suspensionsmittel benetzt werden, in dem ein Binder teilweise oder ganz gelöst ist. Das Suspensionsmittel wird nach der Benetzung entfernt, so dass die verbleibenden Agglomerate eine Größe von 150 bis 850 µm aufweisen. Dieses Verfahren erfordert einen hohen apparativen Aufwand und muss sehr genau gesteuert werden, damit die hergestellten Agglomerate die gewünschte Stabilität haben.

Aufgabe der vorliegenden Erfindung war es, sterolhaltige Formulierungen zur Verfügung zu stellen, die mit einfachen und schnellen Prozessen herzustellen sind und eine gute und schnelle Dispergierung und Einarbeitung von unveresterten Sterolen und/oder Stanolen in Lebensmitteln ermöglichen, wobei die Formulierungen in den Lebensmitteln gute sensorische und organoleptische Eigenschaften aufweisen sollen.

### Beschreibung der Erfindung

Gegenstand der Erfindung ist ein Nassvermahlungs- Verfahren zur Herstellung von gut benetzbaren Sterolformulierungen, bei dem man
a) ein Additiv ausgewählt aus der Gruppe, die gebildet wird von Proteinen, proteinhaltigen Hilfsstoffen, Kohlenhydraten, Cellulosederivaten, Zuckeralkoholen, Fruchtkonzentraten und Gemüsekonzentraten in Wasser oder einem wässrigen Suspensionsmedium löst oder dispergiert
b) dieser Lösung/Dispersion Sterol- und/oder Stanolpartikel mit einer mittleren Teilchengröße von mindestens 1 mm zusetzt,
c) die so entstandene Dispersion in einer Mühle, die nach dem Rotor-Stator-Prinzip arbeitet, homogenisiert und zerkleinert, und
d) gegebenenfalls anschließend trocknet,
mit der Maßgabe, dass die Sterol- und/oder Stanolpartikel in der Endformulierung in einer Teilchengrößenverteilung mit einem D_{90%} von maximal 50 µm vorliegen.

Das erfindungsgemäße Verfahren ermöglicht es Pulver auch mit freien unveresterten Sterolen und Stanolen herzustellen, die eine leichte Weiterverarbeitung der lipophilen Wirkstoffe ohne großen apparativen Aufwand und bei Raumtemperatur in Lebensmitteln, insbesondere Getränken ermöglichen. Das Pulver hat eine geringe Agglomerationsneigung und somit gute Fließeigenschaften. Es zeichnet sich durch eine gute Homogenität aus und lässt sich aufgrund seiner verbesserten Benetzbarkeit ohne großen technischen Aufwand weiterverarbeiten, wobei auch eine homogene Verteilung in der Endformulierung schnell erreicht wird. Durch die Beschichtung der Steroloberfläche mit den hydrophilen Additiven werden die organoleptischen Eigenschaften und die Sensorik entscheidend verbessert. Das beschichtete Pulver klebt nicht an Zähnen und Mundschleimhaut, so dass der unangenehme Steringeschmack, der in den wirkstoffhaltigen Lebensmitteln zu erheblichen Geschmackseinbußen führt vollständig unterdrückt wird.

Durch die Anwendung hydrophiler Additive wie Proteine, proteinhaltigen Hilfsstoffe, Kohlenhydrate, Zuckeralkohole, Fruchtkonzentrate und Gemüsekonzentrate werden nicht nur Solubilisierungseigenschaften und Dispergiereigenschaften verbessert, überraschender Weise zeigen diese Pulver auch eine erhöhte Lagerstabilität gegenüber reinen gemahlenen Sterolen, die eine hohe Agglomerationstendenz aufweisen.
Das Verfahren erlaubt es bei der Verarbeitung von unveresterten Sterolen und Stanolen auf organische Lösungsmittel oder ein Erhitzen der Formulierung zu verzichten und trotz des wässrigen Mediums keine Emulgatoren mit hoher Oberflächenaktivität speziell vom Typ der Lecithine, Monoglyceride, Diglyceride, Polysorbate, Natriumstearyllactylat, Glycerolmonostearat, Milchsäureester und Polyglycerinester einzusetzen. Die geringen Emulgatoreigenschaften der hydrophilisierenden Hilfsstoffe, insbesondere der Caseinate, des Milchpulvers oder des Gummi arabicums sind ausreichend, um die Homogenität des hergestellten Pulvers und eine leichte Redispergierbarkeit und Verarbeitbarkeit zu gewährleisten. Der Verzicht auf weitere Emulgatoren vereinfacht die Weiterverarbeitung durch Reduktion möglicher Inkompatibilitäten mit anderen Lebensmittelbestandteilen und verringert das Auftreten von Unverträglichkeiten beim Verbraucher.

Besonderer Vorteil des Verfahrens ist die Durchführung von Mahlung und Coating in einem Arbeitsgang. Die Anwendung des Nassmahlverfahrens zur Zerkleinerung der Sterolpartikel vermeidet das hohe Risiko der Pulverexplosionen. Die Partikelgröße der anfänglich eingesetzten Sterole und/oder Stanole ist relativ groß, um einerseits Pulverexplosionen zu vermeiden und andererseits eine gute Handhabung zu gewährleisten. So können fertige Prills, die eine sehr hohe Lagerstabilität haben, eingesetzt werden. Vorzugsweise liegen die durchschnittlichen Teilchengrößen über 1 mm. In dieser Größe wird die Partikelgrößenbestimmung durch eine herkömmliche Siebanalyse durchgeführt. Die Sterol- und/oder Stanolpartikel in der Endformulierung liegen nach der Nassmahlung in einer Teilchengrößenverteilung mit einem D_{90%} von maximal 50 um, vorzugsweise maximal 40 µm und besonders bevorzugt maximal 30 µm vor. Die Teilchengrößenverteilung wurde mit einem Gerät der Fa. Beckman Coulter, Typ LS 230 bestimmt und berechnet als Volumenverteilung. Die Messung erfolgte in wässriger Suspension.

Um den Verfahrensaufwand gering zu halten soll die zur Mahlung benötigte Zeit, die zu diesem Zerkleinerungsgrad führt maximal 2 Stunden, bevorzugt maximal 1 Stunde betragen.

Die dazu einzusetzende Mühle beruht auf einem Rotor-Stator-Prinzip. Zahnkolloidmühlen, aber auch Ultra-Turrax, Korundscheiben-Mühlen, Lochscheibenmühlen oder Ringspaltkugelmühlen, bei denen sich die Kugeln im Spalt zwischen Rotor und Gehäuse befinden, eignen sich für das erfindungsgemäße Verfahren. Als besonders vorteilhaft haben sich Zahnkolloidmühlen erwiesen. Basierend auf der Beobachtung, dass der Energieeintrag beim Mahlen ein Maß haben muss, dass einerseits eine ausreichende Zerkleinerung ohne extreme Erwärmung des Mahlgutes ermöglicht und andererseits zu einer geringen Aufladung der Partikel führen soll, haben sich diese Mühlen besonders bewährt. Scherkräfte, die durch Hochleistungsmühlen ausgeübt werden, wie sie aus dem Europäischen Patent EP 1148793 B1 zur Zerkleinerung von Sterolen bekannt sind, sind einer guten Lagerstabilität ohne Verklumpung der Partikel, nicht zuträglich. Sie haben sich außerdem für einen gleichmäßigen oberflächlichen Überzug durch die hydrophilisierenden Additive als nachteilig erwiesen.
Der apparative Aufwand der erfindungsgemäßen Herstellungsapparatur ist somit sehr gering. Auf eine Kühlung des Mahlgutes während des Mahlens kann verzichtet werden, die thermische Belastung des Gutes ist niedrig. Zusätzlich wird das Risiko von Staubexplosionen durch die Anwendung der Nassvermahlung extrem herabgesetzt.
Es ist mit dem erfindungsgemäßen Nassvermahlungs-Verfahren möglich, Pulver mit einem sehr hohen Sterolgehalt mit den oben beschriebenen vorteilhaften Eigenschaften herzustellen, wobei auf die Verwendung organischer Lösungsmittel und ein Erhitzen der Sterolpartikel verzichtet wird. Die wässrigen Dispersionen weisen Konzentrationen an Sterolen und Stanolen von mindestens 20 Gew. %, bevorzugt mindestens 30 Gew. % und besonders bevorzugt mindestens 40 Gew. % und speziell mindestens 50 Gew. % bezogen auf das Gesamtgewicht der Dispersion auf.

Vorzugsweise werden diese Dispersionen getrocknet. Hierzu bieten sich die herkömmlichen Trocknungsverfahren wie Vakuumtrocknung oder Sprühtocknung an. Da die Additive lediglich zur Hydrophilisierung eingesetzt werden und die Oberfläche der Sterole damit überzogen werden, ist der Gesamtgehalt an Sterolen in den Pulvern sehr hoch. Das nach der Trocknung resultierende Pulver enthält sogar mindestens 75 Gew. % besonders bevorzugt mindestens 85 Gew. % und insbesondere mindestens 90 Gew. % Sterole und/oder Stanole bezogen auf das Gewicht des Pulvers.

Der Sterolgehalt der Endformulierung ist abhängig von der eingesetzten Menge des hydrophilen Additives. Vorteilhaft ist ein Gewichtsverhältnis Additiv zu Sterol-/Stanolanteil von 1 : 3 bis 1 : 20, vorzugsweise 1: 9 bis 1 : 15 und besonders bevorzugt bis 1: 14 bis 1: 16.

Die durch diese Verfahren hergestellten sterolhaltigen Formulierungen können auf einfache Weise in Lebensmittel, insbesondere in Milch, Milchgetränke, Molke-, Joghurtgetränke, Margarine, Fruchtsäfte, Fruchtsaftgemische, Fruchtsaftgetränke, Gemüsesäfte, Kohlensäurehaltige und kohlensäurefreie Getränke, Sojamilchgetränke oder proteinreiche flüssige Nahrungsersatzgetränke, sowie fermentierte Milchzubereitungen, Joghurt, Trinkjoghurt, oder Käsezubereitungen, aber auch in pharmazeutische Zubereitungen eingearbeitet werden.

Setzt man als Additiv Frucht- oder Gemüsekonzentrat ein, so sind zwei Verfahrensvarianten möglich: Einerseits kann das Frucht- oder Gemüsekonzentrat (auch Frucht- oder Gemüsepüree oder Frucht- oder Gemüsemark) zuvor im Suspensionsmittel dispergiert werden und somit verdünnt werden (Schritt a)). Andererseits kann Frucht- oder Gemüsekonzentrat direkt als Suspensionsmittel für die Sterole und/oder Stanole eingesetzt werden, so dass man lediglich die Sterole und/oder Stanole den Konzentraten zusetzt und die entstehende Dispersion in der Rotor-Stator-Mühle zerkleinert und homogenisiert. Weitere der im Schritt a) aufgeführten Additive werden dann nicht benötigt.
Die resultierenden Formulierungen haben einen hohen Gehalt an Sterolen und/oder Stanolen. Sie weisen in der Regel eine Fließgrenze auf, sind also fest, lassen sich aber durch Scherung wieder verflüssigen, so dass sie mit einfachen Mitteln direkt in Lebensmittelendformulierungen weiterverarbeitet werden können.

Einen weiteren Gegenstand der Erfindung stellen daher Frucht- und Gemüsekonzentrate dar, die mindestens 1 Gew.%, vorzugsweise mindestens 5 Gew. % und besonders bevorzugt mindestens 15 Gew. % Sterole und/oder Stanole bezogen auf die Konzentrate enthalten. Diese Konzentrate haben einen Wassergehalt von maximal 85 Gew. % vorzugsweise maximal 75 Gew. % und besonders bevorzugt maximal 65 % auf, um die für die Weiterverarbeitung vorteilhafte Konsistenz aufzuweisen. Die darin enthaltenen Sterol- und/oder Stanolpartikel haben eine Teilchengrößenverteilung mit einem D_{90%} von maximal 50 µm, vorzugsweise maximal 40 µm und besonders bevorzugt maximal 30 µm auf.

Ein weiterer Gegenstand der Erfindung betrifft Lebensmittelzubereitungen, die die Sterol-/Stanolformulierungen der genannten Zusammensetzung enthalten. Sie werden bevorzugt in Getränken und Milchprodukten eingesetzt, die dann 0,1 bis 50 Gew.-%, bevorzugt 1 bis 20 Gew.-% der pulverförmigen beschichteten Zubereitungen bezogen auf das Gesamtgewicht der Lebensmittel, enthalten.

### Sterol- und/oder Stanol

In der vorliegenden Erfindung werden aus Pflanzen und pflanzlichen Rohstoffen gewonnene Sterole, sogenannte Phytosterole und Phytostanole eingesetzt. Bekannte Beispiele sind Ergosterol, Brassicasterol, Campesterol, Avenasterol, Desmosterol, Clionasterol, Stigmasterol, Poriferasterol, Chalinosterol, Sitosterol und deren Mischungen, darunter werden bevorzugt β-Sitosterol und Campesterol verwendet. Ebenso fallen die hydrierten gesättigten Formen der Sterole, der sogenannten Stanole unter die eingesetzten Verbindungen, auch hier werden β-Sitostanol und Campestanol bevorzugt. Als pflanzliche Rohstoffquellen dienen unter anderem Samen und Öle von Sojabohnen, Kanola, Palmkernen, Mais, Kokos, Raps, Zuckerrohr, Sonnenblume, Olive, Baumwolle, Soja, Erdnuss oder Produkte aus der Tallölproduktion.

### Proteinhaltige Hilfsstoffe und/oder Proteine

Als proteinhaltige Hilfsstoffe und Proteine werden bevorzugt Milchpulver und/oder Molkepulver und/oder Casein und/oder Caseinate eingesetzt. Milchpulver wie handelsübliche Vollmilch- und Magermilchpulver, die aus den jeweiligen Milchqualitäten durch Trocknung gewonnen worden sind, sind besonders geeignet. Sie können in Mischungen mit weiteren Proteinen oder als alleiniger Trägerstoff eingesetzt werden. Werden weitere Proteine zugesetzt oder Proteine anstelle des Milchpulvers als Trägerstoff verwendet, so sind darunter isolierte Proteine zu verstehen, die aus natürlichen tierischen und pflanzlichen Quellen gewonnen werden und bei der Herstellung der pulverförmigen Zubereitungen zugesetzt werden. Mögliche Quellen für Proteine stellen Pflanzen wie Weizen, Soja, Lupine, Mais oder Quellen tierischen Ursprungs wie Eier oder Milch dar.

Magermilchpulver ist im Sinne der vorliegenden Erfindung besonders bevorzugt, da es ausreichend hydrophilisierende Eigenschaften hat ohne deshalb auch gleichzeitig die eingangs beschriebenen Nachteile solcher Lebensmittelemulgatoren zu zeigen, die sonst üblicherweise speziell für die Herstellung von Getränken und Milchprodukten, speziell Fermentationsprodukten wie Joghurt verwendet werden. Außerdem überdeckt Magermilchpulver den typischen unangenehmen Sterolgeschmack am besten und Formulierungen mit diesm Additiv haben verbesserte sensorische Eigenschaften gegenüber anderen Hilfsstoffen.

### Kohlenhydrate

Die als Kohlenhydrate eingesetzten Verbindungen beinhalten alle lebensmittelgeeigneten Poly- und Monosaccharide, wie beispielsweise Glucose, Saccharose, Fructose, Trehalose, Maltose, Maltodextrin, Cyclodextrin, Invertzucker, Palatinose, Lactose, Guar Gum, Xanthan, Pektine, Stärke, Stärkederivate und modifizierte Stärke, Alginate, Carrageen, Weizenkleber und Gummi arabicum. Bevorzugt werden Gummi arabicum, Galactomannane wie Guar Gum, Xanthan, Stärke und Stärkederivate und modifizierte Stärken (OSA-Stärke) als Kohlenhydrat eingesetzt, besonders bevorzugt ist Gummi arabicum.

### Weitere Hilfsstoffe

Als weitere Hilfsstoffe können die erfindungsgemäßen Zubereitungen Antioxidantien, Konservierungsmittel und Fließverbesserungsmittel enthalten. Beispiele für mögliche Antioxidantien oder Konservierungsmittel sind Tocopherole, Lecithine Ascorbinsäure, Parabene, Butylhydroxytoluol oder -anisol, Sorbinsäure oder Benzoesäure und deren Salze. Bevorzugt werden Tocopherole als Antioxidantien eingesetzt.
Als Fließregulierungs- und verbesserungsmittel kann Siliciumdioxid eingesetzt werden.
bezogen auf das Gesamtgewicht der Pulver, mit der Maßgabe, dass sie frei von Emulgatoren mit hoher Oberflächenaktivität ausgewählt aus der Gruppe, die gebildet wird von Lecithinen, Monoglyceriden, Diglyceriden, Polysorbaten, Natriumstearyllactylat, Glycerolmonostearat, Milchsäureestern und Polyglycerinestern, sind.

### Beispiele

### Beispiel 1

2400 g VE-Wasser wurden im Trichter einer Fryma-Mühle (Fa. Fryma Rheinfelden, Typ MZ 80 R, Spaltweite: 240 µm) vorgelegt, darin wurden 120 g Magermilchpulver (Sprühmagermilchpulver ADPI Grade, Lieferant: Fa. Almil Bad Homburg) dispergiert und die Dispersion im Kreislauf bei 4U homogenisiert. 1800 g Sterolmischung (Tallöl/Rapssterin 70/30, Prills ~ 2 mm) wurden zugegeben. Der Spalt wurde langsam geschlossen (minimale Einstellung) und die Mischung im Umlauf 30 min homogenisiert. Hierbei stieg die Temperatur von 24°C bis auf 53°C an.

Ein Teil der so erhaltenen Dispersion wurde im Vakuum bei 60°/1 mbar getrocknet. Es erfolgte im Anschluss eine Messung der Teilchengrößenverteilung des vakuumgetrockneten Pulvers durch Laserdiffraktometrie (Fa. Beckman Coulter, Typ LS 320). Diese ergab einen D_{90%} von 25µm.

Ein weiterer Teil wurde sprühgetrocknet (Sprühtrocknungsanlage APV Anhydro Typ 3 S, ( 2-Stoff-Düse: 3 mm, Fa. Anhydro) Temperatureinlass: 185 °C, Temperaturauslass: 90°C, Druck 2 bar)

### Beispiel 2

2700 g VE-Wasser wurden im Trichter einer Fryma-Mühle (Fa. Fryma Rheinfelden, Typ MZ 80 R, Spaltweite: 240 µm) vorgelegt, darin wurden 138 g Gummi arabicum (TS 94%) dispergiert und die Dispersion im Kreislauf bei 4U homogenisiert. 2000 g Sterolmischung (Tallöl/Rapssterin 70/30, Prills ~ 2 mm) wurden zugegeben. Der Spalt wurde langsam geschlossen (minimale Einstellung) und die Mischung im Umlauf 30 min homogenisiert.
Ein Teil der so erhaltenen Dispersion wurde im Vakuum bei 60°/1 mbar getrocknet, ein weiterer Teil sprühgetrocknet (Sprühtrocknungsanlage APV Anhydro Typ 3 S).
Es erfolgte im Anschluss eine Messung der Teilchengrößenverteilung des vakuumgetrockneten Pulvers durch Laserdiffraktometrie (Fa. Beckman Coulter, Typ LS 320). Diese ergab einen D_{90%} von 24 µm.

### Beispiel 3

### Nassvermahlung von Sterinen mit Coating und anschließender Sprühtrocknung:

im Trichter einer Zahnkolloidmühle (Fa. Fryma/ Typ MZ 80 R) wurden 3055 g Wasser bei Raumtemperatur vorgelegt. Bei offenem Spalt (Stellung 0,9) wird die Mühle gestartet und 195 g Magermilchpulver zugegeben und im Umlauf suspendiert und gelöst. 1750 g Phytosterin (Tallöl/Rapssterin 70/30, Prills 1-2 mm) werden langsam zugegeben und eingemischt.
Der Mühlenspalt wurde nach und nach geschlossen (Ende: Stellung 0,0). Bei Endstellung wird noch 30 Min. im Umlauf gemahlen. (Umpumpleistung 5 1/ Min./ Endtemperatur 48°C). Die erhaltene thixotrophe, homogene Dispersion wird anschließend sprühgetrocknet (Sprühtrocknungsanlage APV Anhydro Typ 3 S)..

### Beispiel 4

### Nassvermahlung von Sterinen in Fruchtmark:

Im Trichter einer Zahnkolloidmühle (Fa. Fryma/ Typ MZ 80 R) wurden 3440 g Mangopüree (Fa. Döhler, Wassergehalt 70 %) bei Raumtemperatur vorgelegt. Bei offenem Spalt (Stellung 0,9) wird die Mühle gestartet und das Mangopüree im Umlauf gefahren/ gemahlen. 640 g Phytosterin (Tallöl/Rapssterin 70/30, Prills 1-2 mm) wurden langsam zugegeben und eingemischt. Der Mühlenspalt wird nach und nach geschlossen (Ende: Stellung 0,0). Bei Endstellung wurde noch 30 Min. im Umlauf gemahlen. (Umpumpleistung 3 1/ min./ Endtemperatur 47°C).

Es resultierte eine homogene Fruchtpaste mit feinstvermahlenem Sterinanteil. Das Produkt weist eine Fließgrenze auf, wird aber beim Schütteln wieder flüssig. Die Fruchtpaste ist daher hervorragend geeignet zur Einarbeitung in trübe Fruchtsäfte/ Fruchtgetränke. Der Sterinanteil kann auf diesem Weg problemlos eingebracht werden ohne die störenden hydrophoben Eigenschaften üblicher Sterinpulver. Die feinstgemahlenen Sterinpartikel werden im Fruchtsaft optisch nicht wahrgenommen (keine Aufrahmungen/ Farbunterschiede). Das Mundgefühl der nassvermahlenen Sterolpartikel im Fruchtsaft ist, wie angestrebt, neutral.

### Dispergiertest

Die so erhaltenen Pulver wurden in Milch und Wasser im Vergleich zu gemahlenen Sterolen der vergleichbaren Teilchengrößenverteilung dispergiert. Hierzu wurden ca. 250 ml der zu untersuchenden Flüssigkeit in ein Becherglas gegeben und gerührt (ca. 100 rpm). Zu der gerührten Flüssigkeit wurden 2,5 g des jeweiligen Pulvers zugegeben und das Dispergierverhalten bewertet.

Das gecoatete Sterol ließ sich in kaltem (15°C) und warmen (60°C) Wasser sowie in Milch (18°C) sehr gut dispergieren, während das unbehandelte Sterol schlecht dispergiert wurde und aufgrund der hydrophoben Oberfläche auf Flüssigkeitsoberfläche liegen blieb.

Die sensorische Bewertung ergab, dass die verkapselten Sterole in Wasser neutral schmeckten und nicht am Gaumen und im Mundraum klebten während das unbehandelte Pulver an der Mundschleimhaut klebte und neben einem typischen negativen Steringeschmack ein unangenehmes sensorisches Gefühl hinterließ.

Die erhaltenen Pulver zeichnen sich aus durch verbesserte Rieselfähigkeit, bessere Einrührbarkeit in Wasser und höheres Schüttgewicht im Vergleich zu üblichen feinvermahlenen Sterinen. Die getrockneten Produkte weisen einen Steringehalt von über 90 % auf. Im Beispiel 1 ist der Steringehalt des getrockneten Pulvers 93%. Die Pulver lassen sich durch einfaches Rühren in wässrige Systeme, wie Wasser, Säfte, Milch etc. einbringen

Die Dispersionen besitzen eine Fließgrenze, lassen sich leicht umrühren und können einfach in wässrige Systeme, wie kaltes Wasser, Säfte, Milch etc. zugegeben werden.

## Patentansprüche

1. Nassvermahlungs- Verfahren zur Herstellung von gut benetzbaren Sterolformulierungen, bei dem man
a) ein Additiv ausgewählt aus der Gruppe, die gebildet wird von Proteinen, proteinhaltigen Hilfsstoffen, Kohlenhydraten, Cellulosederivaten, Zuckeralkoholen, Fruchtkonzentraten und Gemüsekonzentraten in Wasser oder einem wässrigen Suspensionsmedium löst oder dispergiert
b) dieser Lösung/Dispersion Sterol- und/oder Stanolpartikel mit einer mittleren Teilchengröße von mindestens 1 mm zusetzt,
c) die so entstandene Dispersion in einer Mühle, die nach dem Rotor-Stator-Prinzip arbeitet, homogenisiert und zerkleinert, und
d) gegebenenfalls anschließend trocknet,
mit der Maßgabe, dass die Sterol- und/oder Stanolpartikel in der Endformulierung in einer Teilchengrößenverteilung mit einem D_{90%} von maximal 50 µm vorliegen.

2. Nassvermahlungs- Verfahren zur Herstellung von gut benetzbaren Sterolformulierungen nach Anspruch 1, **dadurch gekennzeichnet, dass** das Protein oder der proteinhaltige Hilfsstoff ausgewählt wird aus Milchpulver und/oder Molkepulver und/oder Casein und/oder Caseinaten.

3. Nassvermahlungs- Verfahren zur Herstellung von gut benetzbaren Sterolformulierungen nach den Ansprüchen 1 und/oder 2, **dadurch gekennzeichnet, dass** als Additiv Kohlenhydrate ausgewählt aus der Gruppe, die gebildet wird von Glucose, Saccharose, Fructose, Trehalose, Maltose, Maltodextrin, Cyclodextrin, Invertzucker, Palatinose, Lactose, Guar Gum, Xanthan, Pektine, Stärke, Stärkederivate, modifizierte Stärken, Alginaten, Carrageen, Weizenkleber und Gummi arabicum.

4. Nassvermahlungs- Verfahren zur Herstellung von gut benetzbaren Sterolformulierungen nach mindestens einem der Ansprüche 1 bis 3, **dadurch gekennzeichnet, dass** Gummi arabicum oder Magermilchpulver als Additive eingesetzt werden.

5. Verfahren zur Herstellung beschichteter Sterolpulver nach mindestens einem der Ansprüche 1 bis 4, **dadurch gekennzeichnet, dass** die Sterol- und/oder Stanolpartikel in der Endformulierung in einer Teilchengrößenverteilung mit einem D_{90%} von maximal 50 µm vorliegen

6. Nassvermahlungs- Verfahren zur Herstellung von gut benetzbaren Sterolformulierungen nach mindestens einem der Ansprüche 1 bis 6, **dadurch gekennzeichnet, dass** die im Schritt c) eingesetzte Mühle eine Zahnkolloidmühle ist.

7. Nassvermahlungs- Verfahren zur Herstellung von gut benetzbaren Sterolformulierungen nach mindestens einem der Ansprüche 1 bis 6, **dadurch gekennzeichnet, dass** das Gewichtsverhältnis Additiv zu Sterol-/Stanolanteil von 1 : 3 bis 1 : 20 beträgt.

8. Nassvermahlungs- Verfahren zur Herstellung von gut benetzbaren Sterolformulierungen ähnlich dem Verfahren gemäß Anspruch 1, **dadurch gekennzeichnet, dass** als wässriges Suspensionsmittel direkt ein Frucht- oder Gemüsekonzentrat eingesetzt wird, so dass keines der im Schritt a) weiterhin aufgeführten Additive zugefügt wird.

9. Frucht- oder Gemüsekonzentrat, enthaltend mindestens 1 Gew. % Sterole und/oder Stanole.

10. Sterol- und/oder Stanolhaltige Dispersionen, erhältlich durch ein Verfahren gemäß mindestens einem der Ansprüche 1 bis 8..

11. Sterol- und/oder Stanolhaltige Pulverformulierungen, erhältlich durch ein Verfahren gemäß mindestens einem der Ansprüche 1 bis 7.

12. Lebensmittel, enthaltend 0,1 bis 50 Gew.-% der Sterolzubereitungen nach den Ansprüchen 9 bis 11.
